# EUROPEAN PATENT APPLICATION

(11) **EP 1 650 453 A1**
(43) Date of publication of application: **26.04.2006**
(21) Application number: 04748146.0
(22) Date of filing: 26.07.2004
(51) Int. Cl.: F16D 7/04, F16D 43/202, A63H 29/00, A63H 31/00, F16H 35/10

(54) **TRAVELING DEVICE AND POWER LIMITING MECHANISM**

(30) Priority: 28.07.2003 JP 2003281309
(71) Applicant: Konami Corporation, Chiyoda-ku, Tokyo 100-6330 (JP)
(72) Inventor: SAEKI, Kazuyuki, Chiyoda-ku, Tokyo 1006330 (JP); HAYASHI, Ryoji, Chiyoda-ku, Tokyo 1006330 (JP)
(74) Representative: Haley, Stephen
(86) International application number: PCT/JP2004/010987
(87) International publication number: WO 2005/010389

(57) **Abstract**

A running device (1) for transmitting a power from a power source (3L, 3R) to an axle (8) through a power transmitting mechanism (4L, 4R) to rotate a wheel (5L, 5R) which is connected to the axle (8), wherein the wheel includes a power limiting mechanism (9, 10) to limit a torque transmitted between the wheel (5L, 5R) and the axle (8).

## Description

### Technical Field

The present invention relates to a running device and a power limiting mechanism used for a model and the like.

### Background Art

In a running device which transmits a torque from a power source to awheel through apowertransmittingmechanism including a worm, a worm wheel and the like, in order to prevent a gear of the power transmitting mechanism from being damaged when a large external force is applied to the wheel, a power limiting mechanism is conventionally provided for controlling the torque transmitted to the power transmitting mechanism from the wheel (see Japanese Patent No.2834678).

### Disclosure of the Invention

However, since the conventional power limiting mechanism is provided at some midpoint in gear train or the like constituting the power transmitting mechanism, it is difficult to mount the power limiting mechanism if there is not enough installation space of the power transmitting mechanism. Thereupon, it is an object of the present invention to provide a running device and a power limiting mechanism capable of limiting a torque which is input to a power transmitting mechanism from a wheel even if there is not enough installation space for the power transmitting mechanism.

The present invention solves the above problem by the following means:

A running device of the invention is a running device for transmitting a power from a power source to an axle through a power transmitting mechanism to rotate a wheel which is connected to the axle. the wheel includes a power limiting mechanism to limit a torque transmitted between the wheel and the axle.

According to this running device, since the power limiting mechanism is disposed in the wheel, it is unnecessary to separately provide a power limiting mechanism in the power transmitting mechanism. Therefore, even if there is not enough installation space for the power transmitting mechanism, the power transmitting mechanism can be protected against a torque from the wheel by the power limiting mechanism only if there is enough space around the wheel. There is also a merit that the power limiting mechanism can be added to an existing running device having not power limiting mechanism only by exchanging the wheel.

The invention also provides a running device being provided with a pair of driving sources which independently drive a pair of left and right wheels, a power transmitting mechanism being disposed between each of the driving sources and each of the wheels such as to diverge laterally from the driving source toward the wheel, a power being transmitted to the wheel from the power transmittingmechanism through an axle, wherein each of the wheels comprises a power limitingmechanismto limit a torque transmitted between the wheel and the axle.

According to this running device, since the left and right wheels are driven by the left and right driving sources respectively, it is necessary to provide the power transmitting mechanism for each wheel. If each power transmitting mechanism is to be provided with a power limiting mechanism, it is impossible to downsize the running device because the installation space of the power transmitting mechanism is increased. However, it becomes unnecessary to provide the similar limiting mechanism in the power transmitting mechanism by providing the power limiting mechanism in the wheel, and thereby the power transmitting mechanism can be reduced in size, and the running device can be sufficiently reduced in size.

In one preferred aspect of the running device of the invention, the power limiting mechanism includes a rotor which is mounted on the axle to rotate integrally with the axle, and a disk wheel assembled to the rotor, the rotor and the disk wheel respectively include meshing portions which mesh with each other in a circumferential direction of the wheel, at least one of the meshing portions of the rotor and the disk wheel can be displaced in a radial direction, and is pushed toward the other meshing portion by a spring device.

According to this aspect, a torque is transmitted between the rotor and the disk wheel by maintaining the meshed state between the pair of meshing portions by the spring device. However, if the torque transmitted between the rotor and the disk wheel exceeds the limit, the reaction force acting between the meshing portions exceeds the pushing force by the spring device, the meshing portions are displaced in the radial direction to release the meshed state, and the rotor and the disk wheel are relatively rotated. Thereby, the torque transmitted between the wheel and the axle can be limited.

The disk wheel is provided with an accommodating hole for accommodating the rotor therein, a peripheral surface of the accommodating hole is provided with at least one meshing portion which is recessed radially outward of the disk wheel, the rotor is provided with an axle connecting portion connected to the axle, and an arm which is extended from the axle connecting portion along a circumferential direction of the rotor to function as the spring device, the meshing portion of the rotor is provided at a tip end of the arm so as to project radially outward of the rotor.

With this structure, the meshing portion is disposed between the outer periphery of the rotor accommodated in the disk wheel and the peripheral surface of the accommodating hole so that the power transmitting mechanism is made small in size. Thereby, the wheel is restrained from being increased in size. Further, when a pair of left and right symmetric arms is provided by the arm of the rotor, and a pair of left and right symmetric meshing portions is provided by the meshing portion of the rotor, the power limiting function can be generated equally irrespective of the rotation direction of the wheels.

The present invention can also be applied to a power limiting mechanism that can be applied to the above-described running device. That is, the invention also provides a power limiting mechanism being disposed in a wheel for limiting a torque transmitted between the wheel and an axle, comprising a rotor which is fixed to the axle to rotate integrally with the axle, and a disk wheel assembled to the rotor, wherein the rotor and the disk wheel are respectively provided with meshing portions which mesh with each other in a circumferential direction of the wheel, at least one of the meshing portions of the rotor and the disk wheel can be displaced in a radial direction, and is pushed toward the other meshing portion by a spring device.

In the power limiting mechanism of the invention, the disk wheel may be provided with an accommodating hole for accommodating the rotor therein, a peripheral surface of the accommodating hole may be provided with at least one meshing portion which is recessed radially outward of the disk wheel, the rotor may be provided with an axle connecting portion connected to the axle, and an arm which is extended from the axle connecting portion along a circumferential direction of the rotor to function as the spring device, the meshing portion of the rotor may be provided at a tip end of the arm so as to project radially outward of the rotor. Apair of left and right symmetric arms may be provided by the arm of the rotor, and a pair of left and right symmetric meshing portions may be provided by the meshing portion of the rotor.

As described above, according to the invention, by providing the power limiting mechanism to limit a torque transmitted between the axle and the disk wheel in the wheel, since it is unnecessary to dispose the power limiting mechanism in the power transmitting mechanism. Therefore, even if there is not enough installation space for the power transmitting mechanism, it is possible to limit a torque which is input from the wheel to the power transmitting mechanism.

### Brief Description of the Drawings

FIG. 1 is a perspective view showing one embodiment of a running device of the present invention;
FIG. 2 is a perspective view showing a structure of a power transmitting mechanism in the running device shown in FIG. 1;
FIGS. 3A and 3B are enlarged views of parts incorporated in a wheel, wherein FIG. 3A is the enlarged view of a rotor, and FIG. 3B is the enlarged view of a disk wheel; and
FIG. 4 shows the combined rotor and disk wheel shown in FIGS. 3A and 3B.

### Best Mode for Carrying Out the Invention

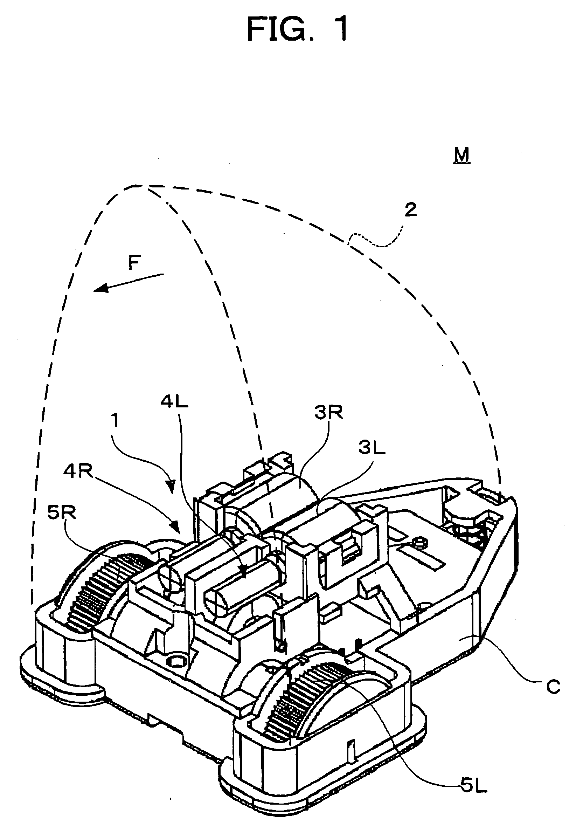

FIG. 1 shows an internal structure of a model M in which a running device used in one embodiment for carrying out the invention is incorporated. The model M includes a chassis C, a running device 1 mounted on the chassis C, and a cover 2 for covering the chassis C. The cover 2 is modeled after a character, an animal or the like, and the arrow F in FIG. 1 shows a frontward direction of the model M.

The running device 1 includes a pair of left and right motors 3L and 3R as power sources, power transmitting mechanisms 4L and 4R for respectively transmitting powers from the motors 3L and 3R, and wheels 5L and 5R which are rotated by the powers transmitted by the power transmitting mechanisms 4L and 4R. As shown in FIG. 1, the motors 3L and 3R are mounted on the upper portion of the chassis C in a state in which the motors 3L and 3R are arranged side-by-side in the lateral direction. The power transmitting mechanisms 4L and 4R are laterally symmetric, and the wheels 5L and 5R are also laterally symmetric. In the following description, the subscripts L and R are not represented in some cases when it is unnecessary to distinguish from each other.

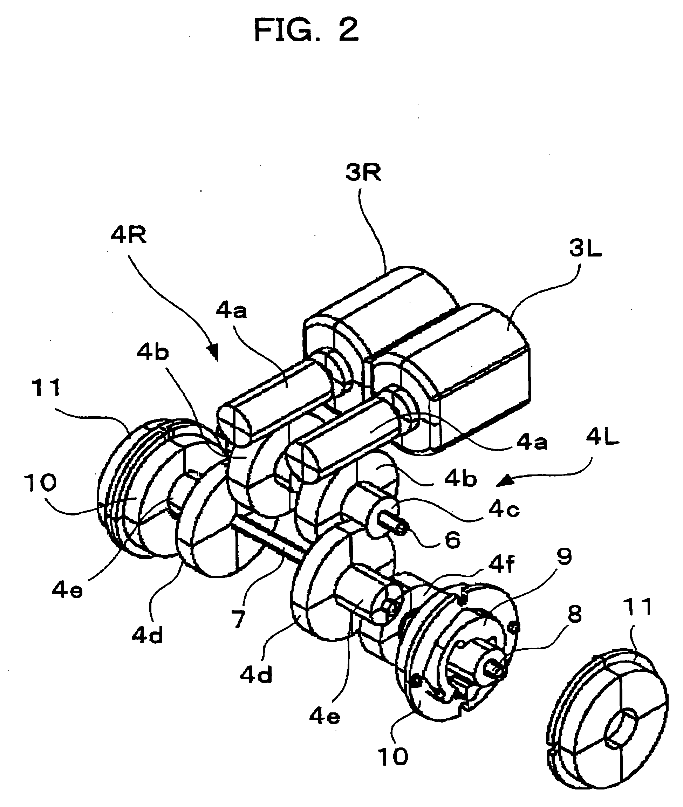

FIG. 2 shows details of the power transmitting mechanisms 4L and 4R. The power transmitting mechanisms 4L and 4R comprise gear trains which gradually diverge laterally from the pair of motors 3L and 3R which are arranged adjacently to each other toward the pair of wheels 5L and 5R disposed on the front and outer sides of the chassis C. Each of the gear train constituting the power transmitting mechanism 4 includes a worm 4a which is connected to an output shaft (not shown) of the motor 3, a worm wheel 4b which meshes with the worm 4a, a first pinion 4c which is coaxial with and integrally rotated with the worm wheel 4b, an intermediate gear 4d which meshes with the first pinion 4c, a second pinion 4e which is coaxial with and integrally rotated with the intermediate gear 4d, and a final gear 4f which meshes with the second pinion 4e.

The left and right worm wheels 4b and first pinions 4c are rotatably supported around a common gear shaft 6 such that they can independently rotate. The left and right intermediate gears 4d and second pinions 4e are rotatably supported around a common gear shaft 7 such that they can independently rotate. The gear shafts 6 and 7 are rotatably supported by the chassis C. The left and right final gears 4f are respectively connected to separate axles 8 (only left axle is shown in FIG. 2). Each of the axles 8 is rotatably supported by the chassis C, and the wheel 5 is mounted on the tip end of the axle 8.

Each wheel 5 includes a rotor 9, a disk wheel 10, and a cap 11 mounted on the disk wheel 10. The rotor 9 is mounted on the axle 8 to be integrally rotated with the axle 8. The disk wheel 10 is assembled outside of the rotor 9.

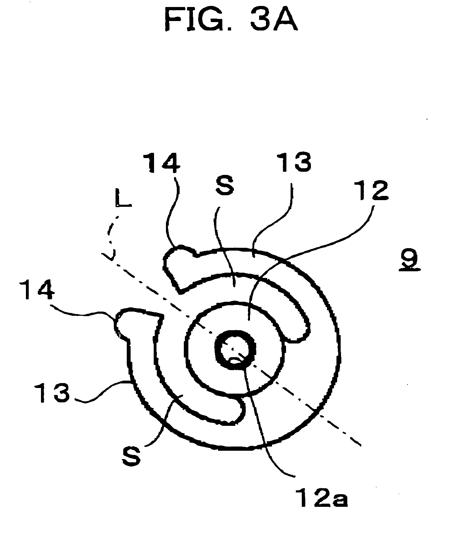

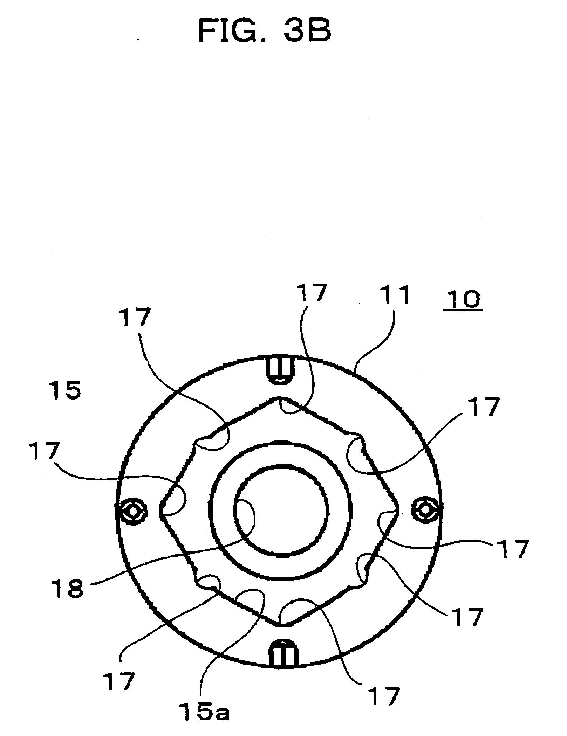

FIG. 3A shows details of the rotor 9 and FIG. 3B shows details of the disk wheel 10. The rotor 9 includes an axle connecting portion 12 disposed at a center thereof, and two arms 13 and 13, each extending in the circumferential direction from the axle connecting portion 12 across a slit. The axle connecting portion 12 is provided at its center with an axle mounting hole 12a into which the axle 8 is fitted. The arms 13 and 13 are provided symmetrically with respect to a phantom reference line L which extends through the axle mounting hole 12a in the radial direction. A meshing portion 14 in convex form is mounted at a tip end of each of the arms 13 and 13 so as to project radially outward of the rotor 9.

The disk wheel 10 is provided with an accommodating hole 15 for accommodating the rotor 9 therein. A peripheral surface 15a of the accommodating hole 15 is formed in a substantially regular octagonal shape. Each of corners of the peripheral surface 15a is formed with a meshing portion 17 which is recessed radially outward for meshing with the meshing portions 14 and 14 of the rotor 9. The disk wheel 10 is provided at its center with a through hole 18 to allow the axle 8 and the axle connecting portion 12 to pass through.

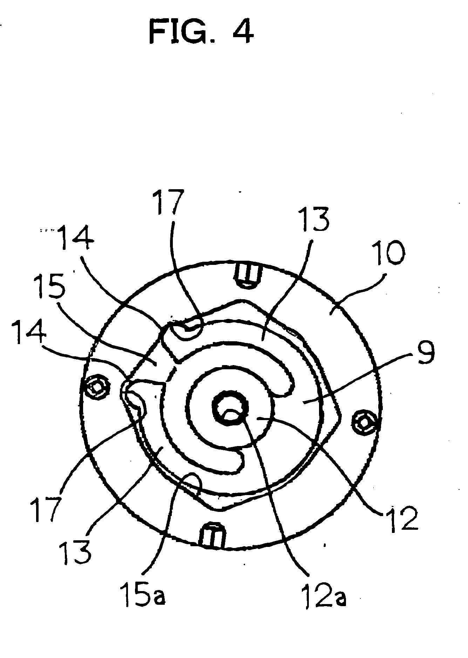

FIG. 4 shows a state in which the rotor 9 is accommodated in the accommodating hole 15 of the disk wheel 10 to mesh with themeshingportions 14 and 17 with each other. In the illustrated state, the arm 13 of the rotor 9 functions as a spring device which pushes the meshing portion 14 against the meshing portion 17 to be meshed with the meshing portion 14. The meshing state between the meshing portions 14 and 17 is maintained by a spring force of the arm 13. Since the meshing portions 14 and 17 are meshed with each other not only in the radial direction of the wheel 5 but also in the circumferential direction, a torque can be transmitted from the rotor 9 to the disk wheel 10 through the meshing portions 14 and 17. Therefore, the wheel 5 can be driven by the motor 3 to allow the model M to run.

When excessive torque is applied to the wheel 5 by pushing the model M with a user's hand or the like, the torque is applied between the meshing portions 14 and 17 and a reaction force to push the meshing portion 14 away from the meshing portion 17 toward a center in the radial direction is generated. If such a reaction force overcomes the spring force of the arm 13, the meshed state between the meshing portions 14 and 17 is released, and even if the disk wheel 10 rotates, this rotation can not be transmitted to the rotor 9. Thus, the torque transmitted from the rotor 9 to the power transmitting mechanism 4 through the axle 8 is limited. Therefore, the gears 4a to 4f mounted on the power transmitting mechanism 4 can be prevented from being damaged.

As described above, according to the running device 1 of this embodiment, the rotor 9 and the disk wheel 10 constitute the power limiting mechanism. The magnitude of a torque that can be transmitted between the meshing portions 14 and 17 can be appropriately varied in accordance with shapes, sizes of the meshing portions 14 and 17 and the spring force caused by the arm 13. The maximum value of the torque that can be transmitted between the rotor 9 and the disk wheel 10 is limited to such a range that a force exceeding the permissible limit is not applied to the gears 4a to 4f of the power transmitting mechanism 4. The minimum value of the torque that can be transmitted between the rotor 9 and the disk wheel 10 is set to such a range that a torque which is input to the wheel 5 from the motor 3 through the power transmitting mechanism 4 and the axle 8 is reliably input to the disk wheel 10 from the rotor 9.

The present invention is not limited to the above-described embodiment, and can be carried out in various modes. For example, the meshing portions 17 of the disk wheel 10 need not be provided at each corner of the substantially octagonal shaped accommodating hole 15, and the number of the meshing portions 17 may be more than 8 or less. The accommodating hole 15 may be formed in a circular shape. The meshing portion 14 of the rotor 9 may be recessed toward the center in the radial direction, and the meshing portion 17 of the disk wheel 10 may project toward the center in the radial direction.

Although the present invention is applied to the running device of the model M in the above description, the running device of the invention is not limited to the model, and can be applied to various running devices.

## Claims

1. A running device for transmitting a power from a power source to an axle through a power transmitting mechanism to rotate a wheel which is connected to the axle, wherein the wheel includes a power limiting mechanism to limit a torque transmitted between the wheel and the axle.

2. A running device being provided with a pair of driving sources which independently drive a pair of left and right wheels, a power transmitting mechanism being disposed between each of the driving sources and each of the wheels such as to diverge laterally from the driving source toward the wheel, a power being transmitted to the wheel from the power transmitting mechanism through an axle, wherein each of the wheels comprises a power limiting mechanism to limit a torque transmitted between the wheel and the axle.

3. The running device according to claim 1 or 2, wherein the power limiting mechanism includes a rotor which is mounted on the axle to rotate integrally with the axle, and a disk wheel assembled to the rotor, the rotor and the disk wheel respectively include meshing portions which mesh with each other in a circumferential direction of the wheel,
at least one of the meshing portions of the rotor and the disk wheel can be displaced in a radial direction, and is pushed toward the other meshing portion by a spring device.

4. The running device according to claim 3, wherein the disk wheel is provided with an accommodating hole for accommodating the rotor therein, a peripheral surface of the accommodating hole is provided with at least one meshing portion which is recessed radially outward of the disk wheel,
the rotor is provided with an axle connecting portion connected to the axle, and an arm which is extended from the axle connecting portion along a circumferential direction of the rotor to function as the spring device,
the meshing portion of the rotor is provided at a tip end of the arm so as to project radially outward of the rotor.

5. The running device according to claim 4, wherein a pair of left and right symmetric arms is provided by the arm of the rotor, and a pair of left and right symmetric meshing portions is provided by the meshing portion of the rotor.

6. A power limiting mechanism disposed in a wheel for limiting a torque transmitted between the wheel and an axle, comprising
a rotor which is fixed to the axle to rotate integrally with the axle, and a disk wheel assembled to the rotor, wherein
the rotor and the disk wheel are respectively provided with meshing portions which mesh with each other in a
circumferential direction of the wheel,
at least one of the meshing portions of the rotor and the disk wheel can be displaced in a radial direction, and is pushed toward the other meshing portion by a spring device.

7. The power limiting mechanism according to claim 6, wherein the disk wheel is provided with an accommodating hole for accommodating the rotor therein, a peripheral surface of the accommodating hole is provided with at least one meshing portion
which is recessed radially outward of the disk wheel,
the rotor is provided with an axle connecting portion connected to the axle, and an arm which is extended from the axle connecting portion along a circumferential direction of the rotor to function as the spring device,
the meshing portion of the rotor is provided at a tip end of the arm so as to project radially outward of the rotor.

8. The power limiting mechanism according to claim 7 , wherein a pair of left and right symmetric arms is provided by the arm of the rotor, and a pair of left and right symmetric meshing portions is provided by the meshing portion of the rotor.
